(19)

Europäisches
Patentamt
European
Patent Office
Office européen
des brevets

(11) **EP 3 666 840 A1**

(12) **EUROPEAN PATENT APPLICATION**
published in accordance with Art. 153(4) EPC

(43) Date of publication:
**17.06.2020 Bulletin 2020/25**

(21) Application number: **18844348.5**

(22) Date of filing: **06.08.2018**

(51) Int Cl.:
$C09J\ 7/20$ (2018.01)      $B32B\ 27/00$ (2006.01)
$C09J\ 201/00$ (2006.01)

(86) International application number:
**PCT/JP2018/029353**

(87) International publication number:
**WO 2019/031429 (14.02.2019 Gazette 2019/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.08.2017 PCT/JP2017/029188**

(71) Applicant: **Teraoka Seisakusho Co., Ltd.
Tokyo 140-8711 (JP)**

(72) Inventors:
• **LEI, Ming
Tokyo 140-8711 (JP)**
• **OGINO, Shohei
Tokyo 140-8711 (JP)**
• **OHISHI, Kazuki
Tokyo 140-8711 (JP)**

(74) Representative: **Hering, Hartmut
Patentanwälte
Berendt, Leyh & Hering
Innere Wiener Strasse 20
81667 München (DE)**

(54) **ADHESIVE SHEET AND MANUFACTURING METHOD FOR SAME**

(57) Disclosed are an adhesive sheet production method of having a step of applying an adhesive composition in a stripe shape on one or both sides of a base to form an adhesive layer, wherein the adhesive composition having viscosity regulated is used for the applying so that the ratio (Te/T) of the thickness (Te) at the edge portion of the stripe-shaped adhesive layer to the thickness (T) of the portion other than the edge portion is 1.8 or less after applying the adhesive composition and drying; and an adhesive sheet in which the ratio (Te/T) of the thickness (Te) at the edge portion of the stripe-shaped adhesive layer obtained as described above to the thickness (T) of the portion other than the edge portion is 1.8 or less.

EP 3 666 840 A1

**Description**

Technical Field

The present invention relates to an adhesive sheet excellent in dimensional stability at the coated edge portion of a stripe-shaped adhesive layer and a method for producing the same.

Background Art

Epoxy resin adhesives have excellent heat resistance, insulation property and adhesiveness, and are therefore used in various applications such as structural bonding and component bonding. Further, an adhesive sheet having a foamable epoxy resin adhesive layer is useful in that there is no contamination around the work area and no dripping to portions other than the adhesive part, as compared with a liquid epoxy resin adhesive.

Patent Document 1 discloses an adhesive sheet having an expandable adhesive layer containing an epoxy resin including a polyfunctional epoxy resin, a phenol resin as a curing agent, an imidazole compound as a curing catalyst, and a temperature-sensitive foaming agent. This adhesive sheet has particularly well-balanced properties such as quick-curing property, heat resistance and adhesiveness, and also has excellent properties such as thermal conductivity due to sufficient filling property.

On the other hand, the adhesive sheet includes an adhesive sheet having a stripe-shaped adhesive layer. Such an adhesive sheet is usually obtained by applying an adhesive composition on a base in a stripe shape and drying the composition. However, the viscosity of the epoxy resin tends to be extremely reduced by heating during drying, so the coated edge may narrow inward or the coated edge portion may be raised (edge portion protrusion) during drying due to the effects of the coating liquid and the surface energy of the base, and the dimensional stability of the edge portion of the stripe-shaped adhesive layer tends to be poor.

When manufacturing a normal adhesive sheet carrying an adhesive layer on the entire surface of a base, the coated edge portion is cut (trimmed) for each base after coating and drying, thus no problem generally occurs even if the dimensional stability at the coated edge portion of the adhesive layer is poor. That is, the above problem can be said to be a problem specific to an adhesive sheet having a stripe-shaped adhesive layer.

Related Art Documents

Patent Document

Patent Document 1: WO2016/163514

Summary of Invention

Technical Problem

In a general use, since the adhesive layer of the adhesive sheet is plastically deformed when pressed, even if the dimensional stability of the coated edge portion of the stripe-shaped adhesive layer is inferior, there is not much problem. However, the present inventors have paid attention to the problem that dimensional stability before pressing, particularly the edge portion protrusion, becomes a problem in a specific application. For example, if the extent of the edge portion protrusion is large, the protruded edge portion may come into contact with a portion that does not need to be adhered before the adhesive sheet is attached, and the portion may be contaminated. Further, when winding a tape-shaped adhesive sheet, unevenness may be caused and the appearance may be deteriorated because of the edge portion protrusion. In addition, poor adhesion may occur.

The present invention has been made to solve the above-mentioned problems of the prior art. That is, an object of the present invention is to provide an adhesive sheet excellent in dimensional stability of the coated edge portion of a stripe-shaped adhesive layer and a method for producing the same.

Solution to Problem

The present inventors have conducted intensive studies in order to solve the above-describe problem and resultantly found that it is very effective to perform coating using an adhesive composition having viscosity regulated so that the ratio of the thickness at the edge portion of a stripe-shaped adhesive layer after coating and drying to the thickness of the layer at the non-edge portion is not more than a specific value, leading to completion of the present invention.

That is, the present invention is an adhesive sheet production method comprising a step of applying an adhesive composition in a stripe shape on one or both sides of a base to form an adhesive layer, wherein the adhesive composition having viscosity regulated is used for the applyingso that the ratio (Te/T) of the thickness (Te) at the edge portion of the stripe-shaped adhesive layer to the thickness (T) of the portion other than the edge portion is 1.8 or less after applying the adhesive composition and drying.

Further, the present invention is an adhesive sheet comprising a stripe-shaped adhesive layer on one or both sides of a base, wherein the ratio (Te/T) of the thickness (Te) at the edge portion of the stripe-shaped adhesive layer to the thickness (T) of the portion other than the edge portion is 1.8 or less.

Advantageous Effect of Invention

According to this invention, an adhesive sheet excellent in dimensional stability of the coated edge portion of a stripe-shaped adhesive layer and its production method can be provided.

Modes for Carrying Out the Invention

[Base]

The base used in the present invention is a member for supporting a stripe-shaped adhesive layer. The type of the base is not particularly limited, but is preferably a heat-resistant insulating base. Although the level of heat resistance varies depending on the intended use, for example, the melting point of the base is preferably 200°C or higher, more preferably 250°C or higher. Further, for example, the continuous use temperature of the base measured in accordance with UL-746B is preferably 100°C or higher, more preferably 150°C or higher.

The base may be a single-layered base composed of one member or a base composed of a laminate having a laminated structure in which one member and another member are pasted by a bonding adhesive for lamination. The base may have flexibility or may have resilience, and its properties are appropriately selected depending on the application. In applications where the stiffness and shape retention capacity of the adhesive sheet are required, the base is preferably a base composed of a laminate.

The member constituting the base is preferably a resin film, a nonwoven fabric or paper, and more preferably a resin film. When the base is a base composed of a laminate, the member is preferably at least one member selected from the group consisting of a resin film, a nonwoven fabric and paper, and it is more preferable that at least one is a resin film.

Specific examples of the resin film includes polyester type resins such as polyethylene terephthalate (PET), polybutylene terephthalate, polyethylene naphthalate (PEN) and aromatic polyester; polycarbonates; polyarylates; polyurethanes; polyamide type resins such as polyamide and polyether amide; polyimide type resins such as polyimide, polyether imide and polyamideimide; polysulfone type resins such as polysulfone and polyether sulfone; polyether ketone type resins such as polyether ketone and polyether ether ketone; polyphenylene sulfide (PPS); and modified polyphenylene oxide. Two or more resin films may be used in combination. Among them, polyphenylene sulfide (PPS), polyethylene naphthalate (PEN), polyimide and polyether ether ketone are preferred.

The base may be subjected to a corona treatment or a primer treatment in order to improve the adhesion with the adhesive layer.

The thickness of the base may be appropriately selected depending on the intended use, and generally is 2 to 200 $\mu$m. It is preferably 9 to 100 $\mu$m, more preferably 12 to 50 $\mu$m.

[Adhesive layer]

In the present invention, the adhesive layer is provided in a stripe shape on at least a part of one side or both sides of a base. The stripe-shaped adhesive layer is an adhesive layer having a pattern extending in a strip shape in the longitudinal direction provided on a part, not the entire surface, of the base. The part where the stripe-shaped adhesive layer is not formed on the base, that is, the part where the surface of the base is exposed may be the central part of the base, or both ends or one end. The stripe-shaped adhesive layer may be a single band-like layer extending in the longitudinal direction of the base, or may be a plurality of band-like layers.

The type of the adhesive layer is not particularly limited, but is preferably a thermosetting adhesive layer containing a thermosetting resin, a curing agent and a curing catalyst, more preferably an expandable adhesive layer (for example, an expandable adhesive layer containing a temperature-sensitive foaming agent), particularly preferably a foamable epoxy adhesive layer containing an epoxy resin as a thermosetting resin.

The epoxy resin preferably contains a polyfunctional epoxy resin. Although the type of the polyfunctional epoxy resin is not limited, novolak type epoxy resins such as a phenol novolak type and a cresol novolak type, and a mixture thereof are preferable. When a novolak-type epoxy resin is used, the glass transition temperature of the cured product becomes high, so that the adhesive force tends to be stable even at high temperatures.

As the epoxy resin, epoxy resins other than the polyfunctional epoxy resin may be used in combination. By use of the polyfunctional epoxy resin and other epoxy resins in admixture, the physical properties such as softening point, melt viscosity, glass transition temperature and storage elastic modulus of the epoxy resin can be controlled easily and in detail. In general, when an epoxy resin of low softening point or in liquid state is mixed, flowability in heating and flexibility before and after curing, of the adhesive layer, can be enhanced. In contrast, when an epoxy resin of high softening point or in semi-solid or solid state is mixed, tackiness of the surface of the adhesive layer can be decreased. Further, the liquid epoxy resin can also be used for the purpose of pre-dispersing components such as a thermally expandable microcapsule in power or grain state contained in the temperature-sensitive foaming agent, or for the purpose of uniformly mixing components of the epoxy resin.

Specific examples of the epoxy resin which can be mixed as described above include bisphenol type epoxy resins such as a bisphenol A type, a dimer acid-modified bisphenol A type and a bisphenol F type; epoxy resins having an aliphatic skeleton such as hexane diol diglycidyl ether; phenoxy resins (polyhydroxy polyether synthesized from bisphenols and epichlorohydrin); and crystalline epoxy resins. The crystalline epoxy resin is non-tacky solid at normal temperature, while acts as a reactive diluent at melting point or more since melt viscosity lowers significantly at melting point or more. For this reason, when the crystalline epoxy resin is contained in the adhesive layer, flowability in heating of the adhesive layer can be more enhanced, acting advantageously on thermal expansion of the adhesive layer. Since it is non-tacky solid at room temperature, it is useful for reducing stickiness of the surface of the adhesive layer, or for rendering the surface of the adhesive layer non-sticky. When the adhesive layer is formed by a melt coating method, the melt viscosity of the epoxy resin can be lowered to enhance the speed of melt coating, by heating at temperatures not lower than the melting point of the crystalline epoxy resin.

The number-average molecular weight of the epoxy resin is generally 100 to 60000 in terms of standard polystyrene by GPC. The epoxy equivalent of the epoxy resin is generally 50 to 30000 g/eq.

The curing agent used for the adhesive layer is not particularly limited, but when an epoxy resin is used, a phenol resin is preferable. When a phenol resin is used as a curing agent and used in combination with an imidazole-based compound as a curing catalyst described later, the curing time can be reduced and the heat resistance can be improved. In addition, the use of a phenol resin as a curing agent facilitates design of heat resistance and electric characteristics. The addition amount of the phenol resin is theoretically determined so that the number of hydroxyl equivalents of the phenol resin relative to the number of epoxy equivalents of the epoxy resin is about 1:1. The ratio of the number of hydroxyl equivalents of the phenolic resin to the number of epoxy equivalents of the epoxy resin is usually 0.5 to 2.0, preferably 0.8 to 1.2.

The curing catalyst used for the adhesive layer is not particularly limited, but when a phenol resin is used as the curing agent, an imidazole compound is preferable. When an imidazole compound is used as a curing catalyst and used in combination with a phenol resin as a curing agent, the curing time is shortened and the heat resistance is improved. In addition, the imidazole-based compound has the advantage that it can be used as a single catalyst and has a very fine particle size grade as compared with other curing catalysts, so that it is easy to use.

Specific examples of the imidazole-based compound include imidazole derivatives such as 2-phenyl-4,5-dihydroxymethylimidazole, 2-phenyl-4-methylimidazole, 2-ethyl-4-methylimidazole, 2,4-diethylimidazole and 2-phenyl-4-methyl-5-hydroxyimidazole. Two or more imidazole-based compounds may be used in combination. Among them, 2-phenyl-4,5-dihydroxymethylimidazole is preferable. The content of the imidazole-based compound is preferably 0.1 to 1.0 parts by mass, more preferably 0.3 to 0.8 parts by mass with respect to 100 parts by mass of resin components in the adhesive layer.

The temperature-sensitive foaming agent used in the adhesive layer includes, for example, inorganic foaming agents such as ammonium carbonate, ammonium hydrogen carbonate, ammonium nitrite, ammonium borohydride and azides; organic foaming agents such as alkane fluorides such as trichloromonofluoromethane, azo compounds such as azobisisobutyronitrile, hydrazine compounds such as p-toluene sulfonyl hydrazide, semi-carbazide compounds such as p-toluene sulfonyl semi-carbazide, triazole compounds such as 5-morpholyl-1,2,3,4-thiatriazole, and N-nitroso compounds such as N,N-dinitrosoterephthalamide; thermally expandable microcapsules obtained by microcapsulating a thermal expansion agent composed of a hydrocarbon compound. Two or more temperature-sensitive foaming agents may be used in combination. When an epoxy resin is used, thermally expandable microcapsules are preferable from the standpoint of no inhibition of curing of the epoxy resin and reduction of adverse effects exerted on physical properties of the epoxy resin.

The thermally expandable microcapsule is a microcapsule having a thermoplastic resin having a gas barrier property as a shell and enclosing a thermal expansion agent inside the shell. When the thermally expandable microcapsule is heated, the thermoplastic resin as a shell softens and the volume of the thermal expansion agent increases, thereby expanding the capsule. For example, vaporization of a hydrocarbon compound having low boiling point can be utilized for expansion of the capsule.

The expansion (foaming) temperature of the thermally expandable microcapsule is preferably not less than the softening point of the epoxy resin and not more than the activation temperature of the curing reaction of the epoxy resin. When this foaming temperature is not less than the softening point of the epoxy resin, the thermal expansion agent can be expanded sufficiently in the softened epoxy resin and the thickness of the adhesive layer after foaming can be made uniform. When this foaming temperature is not more than the activation temperature of the curing reaction of the epoxy resin, curing of an epoxy resin before foaming can be prevented. Further, when melt or solution coating is contained in the production process of the adhesive sheet, gelling of an epoxy resin during these coating steps and an accompanying drying step can be prevented, by adjusting the softening point of an epoxy resin to be not more than the activation temperature of the curing reaction.

The softening point of an epoxy resin can be measured using a ring and ball softening point test method prescribed in JIS K 2207. The foaming temperature of the thermally expandable microcapsule is a temperature at which volume change of the thermally expandable microcapsule occurs, and it can be selected, for example, from a range of 70°C or more and 200°C or less, preferably 100°C or more and 180°C or less.

The content and the volume expansion modulus of the temperature-sensitive foaming agent can be appropriately determined according to the strength and the adhesive force required for the cured adhesive layer and the expansion modulus required for the adhesive sheet. The content of the temperature-sensitive foaming agent is preferably 0.5 to 20 parts by mass, more preferably 2 to 15 parts by mass with respect to 100 parts by mass of resin components in the adhesive layer. The increase factor of the thickness of the adhesive sheet after foaming can be, for example, 1.1 times or more and 10 times or less.

It is preferable that other resins (for example, heat resistant resin) are added to the adhesive layer from the standpoint of, for example, close adhesion to the base, flexibility when bending the adhesive sheet, a leveling property in applying an adhesive and prevention of liquid drip during heating, foaming and curing. Specific examples the other resins include a polyester resin, a butyral resin, a urethane resin, a carboxyl group-terminated butadiene nitrile rubber (CTBN) and epoxy-modified butadiene.

In particular, in the present invention, it is preferable to adjust the viscosity of the adhesive composition to be applied by adjusting the compounding amount of an elastomer (and/or the compounding amount of a solvent) in the adhesive composition. The type of the elastomer is not limited, but a urethane resin is more preferable. The amount of the elastomer in the adhesive layer is preferably 10 to 50 parts by mass, more preferably 15 to 35 parts by mass (based on 100 parts by mass of the sum of the curable resin component such as an epoxy resin and the curing agent resin component).

The urethane resin is, in general, a resin containing a soft segment composed of a polyol monomer unit and a hard segment composed of a polyfunctional isocyanate compound or a low molecular glycol monomer unit. The polyol used in the urethane resin is a compound having two or more hydroxyl groups. The number of a hydroxyl group of the polyol is preferably 2 to 3, more preferably 2 from the standpoint of enhancing properties such as rubber elasticity elongation recovery rate. As the polyol, for example, polyester polyol, polyether polyol, polycaprolactone polyol, polycarbonate polyol and castor oil-based polyol can be used. Two or more polyols may be used in combination.

As the polyfunctional isocyanate compound used as the cross-linking agent for crosslinking a polyol, for example, polyfunctional aliphatic isocyanate compounds, polyfunctional alicyclic isocyanate compounds, and polyfunctional aromatic isocyanate compounds can be used. Further, trimethylolpropane adducts of these compounds, a biuret body reacted with water, and a trimer having an isocyanurate ring can also be used. Two or more polyfunctional isocyanate compounds may be used in combination.

Specific examples of the polyfunctional aliphatic isocyanate compound include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate and 2,4,4-trimethylhexamethylene diisocyanate.

Specific examples of the polyfunctional alicyclic isocyanate compound include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate and hydrogenated tetramethylxylylene diisocyanate.

Specific examples of the polyfunctional aromatic diisocyanate compound include phenylene diisocyanate, 2,4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4'-diphenyl ether diisocyanate, 4,4'-diphenyl diisocyanate, 1,5-naphthalene diisocyanate and xylylene diisocyanate.

The urethane resin is obtained by curing a composition containing the polyol and the polyfunctional isocyanate compound explained above. Particularly, low crystallinity linear polyester type polyurethane resins are preferable, and hexanediol copolyester type polyurethane resins and polytetramethylene glycol type polyurethane resins are more preferable, from the standpoint of properties such as rubber elastic elongation recovery rate.

It is preferable that the adhesive layer contains a heat resistant filler from the standpoint of heat resistance and thermal conductivity. The kind of the heat resistant filler is not particularly restricted, and the heat resistant filler includes, for example, inorganic fillers such as aluminum oxide, magnesium oxide, calcium oxide, aluminum hydroxide, magnesium hydroxide, boron nitride, silicon nitride, silicon oxide and talc (magnesium silicate). Two or more heat resistant fillers may be used in combination. The content of the heat resistant filler is preferably 20 to 300 parts by mass, more preferably 50 to 100 parts by mass (based on 100 parts by mass of the sum of the curable resin component such as an epoxy resin and the curing agent resin component).

The adhesive layer may contain additives such as antioxidants such as phenol type antioxidants and sulfur-based antioxidants, silane coupling agents such as epoxy-modified alkoxysilanes, thixotropic agents such as fumed silica, and pigments and dyes for identification, if necessary.

The thickness of the adhesive layer may be appropriately determined depending on the intended use, but is usually 2 to 300 μm, preferably 2 to 150 μm.

[Adhesive sheet and production method thereof]

The adhesive sheet of the present invention is characterized in that the ratio (Te/T) of the thickness (Te) at the edge portion of the stripe-shaped adhesive layer to the thickness (T) of the part other than the edge portion is 1.8 or less. Further, the method for producing an adhesive sheet of the present invention is characterized in that an adhesive composition having viscosity regulated is used so that this ratio (Te/T) is 1.8 or less. The ratio (Te/T) is preferably 1.6 or less, more preferably 1.5 or less.

The adhesive layer can be formed by, for example, a known solution coating method. The viscosity of the adhesive composition to be applied may be such that the above-mentioned ratio (Te/T) becomes 1.8 or less, and may be appropriately determined depending on the type of the adhesive gent, the thickness of the adhesive layer and the coating conditions. Usually, the viscosity of the adhesive composition to be applied is preferably from 500 to 50,000 mPa·S, more preferably from 1,000 to 10,000 mPa·S. Particularly preferably, it is 3,000 to 9,000 mPa·S. This viscosity can be adjusted by, for example, the compounding amount of an elastomer or the compounding amount of a solvent.

Adjustment of the viscosity of the adhesive composition to be applied may be performed by either the compounding amount of an elastomer or the compounding amount of a solvent. Although it is possible to increase the concentration of the coating liquid, namely to increase the viscosity, by decreasing the compounding amount of a solvent without compounding an elastomer, in this case, there is a risk that the curing reaction will proceed to increase the viscosity and the curing reaction will not occur due to deactivation of the catalyst, during storage of the adhesive composition (before coating) Therefore, it is preferable to adjust the viscosity by adjusting the compounding amount of both an elastomer and a solvent. Further, even when the viscosity is almost the same, the adhesive composition containing a relatively large amount of the elastomer tends to have a lower ratio (Te/T) than the adhesive composition containing a relatively small amount of the elastomer. Furthermore, even if the compounding amount of an elastomer and the compounding amount of a solvent are the same, if the type and the compounding amount of the other components (for example, an epoxy adhesive) are different, the viscosity will be different. Since the viscosity of the adhesive composition may change during storage, it is also preferable to adjust the viscosity immediately before coating.

In particular, when the adhesive composition contains an epoxy adhesive, adjusting the viscosity of the adhesive composition as described above is very effective. This is because the epoxy adhesive tends to give an extremely lowered viscosity due to the heating in the drying step after coating, thus, the edge portion protrusion tends to be easily generated due to the influence of the coating liquid and the surface energy of the base.

In the adhesive sheet of the present invention, when the adhesive layer contains a temperature-sensitive foaming agent, the thickness of the sheet before foaming and curing is preferably 10 to 1000 μm, more preferably 10 to 250 μm, particularly preferably 20 to 200 μm.

EXAMPLES

The present invention will be further illustrated by examples below, but the present invention is not limited to them.

Epoxy resins EP1 to EP7, elastomers E1 to E3, curing agents T1 to T3, curing catalyst T4, temperature-sensitive foaming agent H, heat-resistant inorganic fillers J1 to J3, lubricants S1 to S2, organic solvents, adhesives for pasting bases and top coat adhesives used in Examples and Comparative Examples are shown in Tables 1 to 7 below.

Table 1

| Epoxy resin | Softening Point (°C) | Condition | Epoxy Equivalent (g/eq) | characteristics |
|---|---|---|---|---|
| EP1 | 92 | Solid | 218 | o-cresol novolak type, adhesive |
| EP2 | 70 | Solid | 210 | special polyfunctional novolak type, heat resistant |

(continued)

| Epoxy resin | Softening Point (°C) | Condition | Epoxy Equivalent (g/eq) | characteristics |
|---|---|---|---|---|
| EP3 | 70 | Solid | 290 | biphenyl structure-containing, highly tough, highly heat resistant |
| EP4 | 61 | Solid | 210 | polyfunctional, highly heat resistance, highly flexible |
| EP5 | 86 | Solid | 230 | naphthalene ring, heat resistant, tough |
| EP6 | -- | Semisolid | 176 | phenol novolak general type, highly heat resistant |
| EP7 | 92 | Solid | 395 | isocyanate-modified, highly tough, highly adhesive |

Table 2

| Elastomer | Characteristics |
|---|---|
| E1 | linear polyester polyurethane, adhesive, flexible type, softening point 87°C, molecular weight 222300 |
| E2 | acrylonitrile rubber, nitrile content 40.5% |
| E3 | modified styrene butadiene rubber, glass transition temperature -60°C |

Table 3

| Curing agent/ Catalyst | Softening point (°C) | Hydroxyl group or amine Equivalent (g/eq) | characteristics |
|---|---|---|---|
| T1 (phenol resin) | 87 | 178 | novolak type, highly heat resistant type |
| T2 (phenol resin) | 155 | 100 | polyfunctional type |
| T3 (amine resin) | Melting point 62 | 34 | metaphenylenediamine |
| T4 (imidazole) | Melting point 220 | -- | 2PHZ-PW (manufactured by Shikoku Chemicals Corporation), active range: 141 to 153°C, start range: 153 to 168°C |

Table 4

| Temperature-sensitive foaming agent | Particle Size (μm) | Expansion starting temperature (°C) | Maximum expansion temperature (°C) |
|---|---|---|---|
| H | 9 | 120~130 | 145~155 |

Table 5

| Heat Resistant filler | Particle size (μm) | Chemical component | characteristics |
|---|---|---|---|
| J1 | 3 | Magnesium oxide | thermally conductive, heat resistant, electrically insulating type |

(continued)

| Heat Resistant filler | Particle size (μm) | Chemical component | characteristics |
|---|---|---|---|
| J2 | 5 | Magnesium silicate | thermally conductive, heat resistant, electrically insulating type |
| J3 | Diameter 6, Length 10 | Glass | resin layer reinforcement (shaving prevention), strength (workability improvement), heat resistance improvement |

Table 6

| Lubricant | Component | Compounding amount (parts by mass) |
|---|---|---|
| S1 | X52 - 6015 (manufactured by Shin-Etsu Chemical Co., Ltd.) | 32 |
| | CAT - PM - 10A (manufactured by Shin-Etsu Chemical Co., Ltd.) | 1.6 |
| | CRA92 (manufactured by Wacker Asahikasei Silicone Co., Ltd.) | 94.3 |
| | Distilled water | 265 |
| | Diethylene glycol | 7.1 |
| | Sum | 400 |
| S2 | NC003 (20%) (manufactured by Chukyo Yushi Co., Ltd.) | 10 |
| | Acetylene diol (manufactured by Air Products and Chemicals, Inc.) | 0.4 |
| | Ddistilled water | 389.6 |
| | Sum | 400 |

Table 7

| Solvent | Boiling point (°C) |
|---|---|
| MEK | 79.6 |
| Toluene | 110.6 |
| Ethyl acetate | 77.1 |
| Diisobutylketone | 168.4 |

Details of compounding of adhesive compositions for pasting and thermally expandable adhesive compositions used in Examples and Comparative Examples are shown in Tables 8 to 9 below.

Table 8

| Compounding (parts by mass) | Compounding 1 (pasting) | Compounding 2 | Compounding 3 | Compounding 4 | Compounding 5 |
|---|---|---|---|---|---|
| EP1 | 30 | 30 | 30 | 30 | 10 |
| EP2 | 30 | 30 | 30 | 30 | |
| EP3 | 30 | 30 | 20 | 10 | |
| EP4 | 10 | 10 | | | 30 |
| EP5 | | | | 30 | |

(continued)

| Compounding (parts by mass) | | Compounding 1 (pasting) | Compounding 2 | Compounding 3 | Compounding 4 | Compounding 5 |
|---|---|---|---|---|---|---|
| EP6 | | | | | | 60 |
| EP7 | | | | 20 | | |
| E1 | | 35 | 30 | | | 30 |
| E2 | | | | 26 | | |
| E3 | | | | | 36 | |
| T1 | | 62 | 62 | | | 94 |
| T2 | | | | 37 | | |
| T3 | | | | | 15 | |
| T4 | | 0.4 | 0.4 | 0.4 | 0.4 | 0.4 |
| H | | | 10 | 8 | 10 | 10 |
| J1 | | 25 | 20 | 15 | 18 | 15 |
| J2 | | 50 | 20 | 15 | 18 | 15 |
| J3 | | | 10 | 8 | 10 | 20 |
| Solvent | MEK | Used | Used | Used | Used | Used |
| | Toluene | | Used | Used | Used | Used |
| Concentration (%) | | 50 | 55 | 55 | 55 | 55 |
| Viscosity (mPa•s) | | -- | 3800 | 4500 | 3500 | 4100 |

Table 9

| Compounding (parts by mass) | | Compounding 6 for Comp. Ex. | Compounding 7 for Comp. Ex. | Compounding 8 for Comp. Ex. | Compounding 9 for Comp. Ex. | Compounding 10 for Comp. Ex. |
|---|---|---|---|---|---|---|
| EP1 | | 30 | 30 | 30 | 30 | 30 |
| EP2 | | 30 | 30 | 30 | 30 | 30 |
| EP3 | | 30 | 30 | 30 | 30 | 30 |
| EP4 | | 10 | 10 | 10 | 10 | 10 |
| E1 | | None | 15 | 30 | 30 | 30 |
| T1 | | 62 | 62 | 62 | 62 | 62 |
| T4 | | 0.4 | 0.4 | 0.4 | 0.4 | 0.4 |
| H | | 10 | 10 | 10 | 10 | 10 |
| J1 | | 20 | 20 | 20 | 20 | 20 |
| J2 | | 20 | 20 | 20 | 20 | 20 |
| J3 | | 10 | 10 | 10 | 10 | 10 |
| Solvent | MEK | Used | Used | Used | Used | Used |
| | Toluene | Used | Used | Used | Used | Used |
| Concentration (%) | | 60 | 65 | 20 | 35 | 70 |
| Viscosity (mPa•s) | | 2900 | 4100 | 6 | 103 | 83000 |

Films F1 to F5 and laminated bases used in Examples and Comparative examples are shown in Tables 10 and 11 below.

Table 10

| Heat resistant film | Material | Thickness ($\mu$m) | Production maker (trade name) |
|---|---|---|---|
| F1 (film) | PEN | 38 | Teijin DuPont Films Limited (Teonex Q51) |
| F2 (film) | PEN | 100 | Teijin DuPont Films Limited (Teonex Q51) |
| F3 (film) | PPS | 38 | Toray Industries, Inc. (TORELINA #38-2030) |
| F4 (film) | PPS | 100 | Toray Industries, Inc. (TORELINA #50-2030) |
| F5 (film) | PPS | 50 | Toray Industries, Inc. (TORELINA #100-2030) |

Table 11

| Base | K1 | K2 | K3 | K4 | K5 |
|---|---|---|---|---|---|
| Constitution (face I) | F2 | F4 | F5 | F1 | F3 |
| Constitution (face II) | -- | -- | -- | F1 | F3 |

K4 and K5 were pasted using compounding 1 (pasting) in Table 8.

<Examples 1 to 5, Comparative Examples 1 to 5>

Using respective materials shown in Tables 12 and 13, the adhesive compositions were applied on a base in a stripe shape, and dried to form stripe-shaped adhesive layers, thereby obtaining adhesive sheets. Each of the adhesive sheets was evaluated by the following methods. The results are shown in Tables 12 and 13.

[Adhesive repellence]

The adhesive repellence was checked when applied to a polyester film that had been subjected to a silicone single-side release treatment so that the thickness of the adhesive layer after drying was 50 $\mu$m.

"B": No repellence.
"D": There is repellence.

[Coated edge portion protrusion height (Te/T)]

The sample used in the evaluation of the adhesive repellence was transferred to both sides of a base having a thickness of 100 $\mu$m, the thickness of the adhesive edge portion was measured with a confocal laser microscope, and as a ratio of the coated edge portion protrusion height, the ratio (Te/T) of the thickness (Te) of the edge portion to the thickness (T) of the portion other than the edge portion was calculated.

[Drying property]

The sample surface before foaming and curing was checked for stickiness with a finger tack, and the drying property was evaluated.

"B": No stickiness.
"D": There is stickiness.

[Stiffness]

As the stiffness of the adhesive sheet before and after foaming, the resistance force when bending the foamed adhesive sheet was measured. Specifically, a test was performed according to JIS P 8125 "Paper and board - Determination of stiffness - Taber stiffness tester method", and the bending moment was calculated by the following equation.

$$\text{Bending moment (gf} \cdot \text{cm)} = \text{(reading of the scale)} \times 38.0 \text{ (mm)} \div \text{(width of measured specimen: mm)}$$

[Shape retention capacity]

A test piece before foaming was placed on an aluminum L-shaped frame (thickness: 3 mm), and a pressing jig shaped like a pizza cutter was pressed and rotated toward the corner at a 45 degree angle from the top of the test piece, thereby the test piece was bent so as to be L-shaped. The test piece was taken out after bending work, and the shape of the test piece after 5 seconds was measured with a protractor. Calculation was performed by the following formula, and the shape retention capacity was evaluated based on the following criteria.

$$\text{Shape retention rate (\%)} = 90 \text{ degrees} \div \text{(angle after 5 seconds of bending work)} \times 100 \text{ (\%)}$$

"A": Shape retention rate is 80% or more and 100% or less
"B": Shape retention rate is 65% or more and less than 80%
"D": Shape retention rate is less than 65%

[Insertability (sliding performance)]

The test piece bent in a U-shape in the manner of the above-described shape retention test was inserted into a jig assuming a slot of the stator core at a speed of 500 mm/sec, and it was evaluated whether the test piece could be inserted without being caught.

"B": Not caught on the way
"D": caught on the way

[Adhesive layer shaving]

In the above-described insertability test, the test piece after insertion was observed and it was evaluated whether the foamed adhesive layer was shaved from the heat-resistant base and whether the shaved foamed adhesive layer was scattered.

"B": No shaving or scattering of adhesive
"C": Adhesive is shaved, but there is no scattering
"D": Adhesive is shaved and scattered

[Thickness of adhesive sheet]

The thickness of the adhesive sheet before foaming was measured by a thickness gauge test method according to JIS Z 0237 "Testing methods of pressure-sensitive adhesive tapes and sheets". The thickness of the adhesive sheet after foaming was determined by cutting out the adhesive sheet before foaming into a size of 50 x 50 mm, suspending it vertically in a hot-air dryer, foaming and curing at 170°C for 10 minutes, and cooling for 2 hours at room temperature, thereafter, measuring in the same manner as described above.

[Tensile strength]

The tensile strength (N/10 mm) of the adhesive sheet before foaming was measured in accordance with JIS C 2107 "Methods of test for pressure-sensitive adhesive tapes for electrical purposes". The method of foaming the adhesive sheet is the same as the method described in the item of the thickness of the adhesive sheet described above (the same shall apply hereinafter).

[Elongation]

The elongation (%) of the adhesive sheet before foaming was measured in accordance with JIS C 2107 "Methods of test for pressure-sensitive adhesive tapes for electrical purposes".

[Edge cleaving resistance]

According to the method B of JIS C 2151 "Testing methods of plastic films for electrical purposes", the edge cleaving resistance (N/20 mm) of the adhesive sheet before foaming was measured.

[Insulation breakdown voltage]

The insulation breakdown voltage (kV) of the adhesive sheet after foaming was measured according to JIS C 2107 "Methods of test for pressure-sensitive adhesive tapes for electrical purposes".

[Shear adhesive force (room temperature (23°C), heated at 200°C)]

According to the tensile shear adhesive force test method described in JIS Z1541 "High potential pressure sensitive adhesive double coated tapes", the shear adhesive force of the adhesive sheet after foaming shown below was measured. An SPCC plate (manufactured by Nissin Steel Co., Ltd., trade name: SPCC-SB NCB, 1.0 mm thick, 12 × 100 mm) was used as an adherend. The sample attaching area was 10 × 10 mm, the foaming and curing conditions were 170°C for 10 minutes, and the tensile speed was 200 mm/min. First, the adhesive sheet before foaming was placed on the SPCC plate, and another SPCC plate was further placed via two metal interspace gauges, then, the adhesive sheet was foamed and cured, and the adhesive sheet after foaming was subjected to measurement of the tensile shear adhesive force (room temperature (23°C), heated at 200°C).

Table 12

| | | Ex. 1 | Ex. 2 | Ex. 3 | Ex. 4 | Ex. 5 |
|---|---|---|---|---|---|---|
| Adhesive sheet constitution | Base | K4 | K5 | K1 | K2 | K3 |
| | Expandable adhesive Layer | Compounding 2 | Compounding 2 | Compounding 3 | Compounding 4 | Compounding 5 |
| Adhesive coatability | Adhesive repellency | | | | | |
| | Te/T | 1.5 | 1.5 | 1.6 | 1.4 | 1.6 |
| | Drying property | B | B | B | B | B |
| | Strength (gf•cm) | 151 | | | | 136 |
| Adhesive sheet workability (before foaming) | Shape retention capacity | A | A | B | B | B |
| | Insertability (sliding performance) | B | B | B | B | B |
| | Adhesive layer shaving | B | B | B | B | B |
| Thickness (μm) | before foaming | 197 | 199 | 208 | 199 | 159 |
| | after foaming | 529 | 493 | 524 | 475 | 329 |
| Tensile strength (before foaming) (N/15 mm) | | 277 | 248 | 332 | 377 | |
| Elongation (before foaming) (%) | | 97 | 48 | 74 | 117 | |
| Edge cleaving resistance (before foaming) (N/20 mm) | | 642 | | 323 | 920 | |
| insulation breakdown voltage (after foaming) (kV) | | 22.0 | 14.1 | 15.4 | 27.2 | 13 |
| | Clearance (μm) | 325 | 325 | 362 | 325 | 300 |
| Shear adhesive Force (after foaming) (N/cm2) | Room temperature | 544 | 512 | 425 | 521 | 374 |
| | 200°C | 149 | 114 | 210 | 141 | 190 |

Table 13

| | | Comp. Ex. 1 | Comp. Ex. 2 | Comp. Ex. 3 | Comp. Ex. 4 | Comp. Ex. 5 |
|---|---|---|---|---|---|---|
| Adhesive sheet constitution | Base | K5 | K5 | K5 | K5 | K5 |
| | Expandable Adhesive layer | Compounding 6 | Compounding 7 | Compounding 8 | Compounding 9 | Compounding 10 |
| Adhesive coatability | Adhesive repellency | D | D | D | D | Not evaluated because coating is impossible due to high viscosity |
| | Te/T | 2.2 | 1.9 | 2.2 | 2.0 | |
| | Drying property | B | B | C | C | |
| Adhesive sheet workability (before foaming) | Strength (gf•cm) | Not evaluated due to discontinuous adhesion | | | | |
| | Shape retention capacity | | | | | |
| | Insertability (sliding performance) | | | | | |
| | Adhesive layer shaving | | | | | |
| Thickness (μm) | before foaming | | | | | |
| | after foaming | | | | | |
| Tensile strength (before foaming) (N/15 mm) | | | | | | |
| Elongation (before foaming) (%) | | | | | | |
| Edge cleaving resistance (before foaming) (N/20 mm) | | | | | | |
| insulation breakdown voltage (after foaming) (kV) | | | | | | |
| Shear adhesive Force (after foaming) (N/cm$^2$) | Clearance (μm) | | | | | |
| | Room temp. | | | | | |
| | 200°C | | | | | |

Industrial Applicability

The adhesive sheet of the present invention has excellent dimensional stability at the coated edge portion of a stripe-shaped adhesive layer, thus, is useful for various applications in a wide range of fields such as the electric and electronic fields, the automobile-related fields and the civil engineering and construction fields.

**Claims**

1. An adhesive sheet production method comprising a step of applying an adhesive composition in a stripe shape on one or both sides of a base to form an adhesive layer, wherein
the adhesive composition having viscosity regulated is used for the applying so that the ratio (Te/T) of the thickness (Te) at the edge portion of the stripe-shaped adhesive layer to the thickness (T) of the portion other than the edge portion is 1.8 or less after applying the adhesive composition and drying.

2. The adhesive sheet production method according to Claim 1, wherein the viscosity of the adhesive composition to be applied is regulated by the compounding amount of an elastomer in the adhesive composition.

3. The adhesive sheet production method according to Claim 1, wherein the viscosity of the adhesive composition to be applied is regulated by the compounding amount of a solvent in the adhesive composition.

4. The adhesive sheet production method according to Claim 1, wherein the viscosity of the adhesive composition to be applied is 500 to 50,000 mPa·S.

5. An adhesive sheet comprising a stripe-shaped adhesive layer on one or both sides of a base, wherein
the ratio (Te/T) of the thickness (Te) at the edge portion of the stripe-shaped adhesive layer to the thickness (T) of the portion other than the edge portion is 1.8 or less.

6. The adhesive sheet according to Claim 5, wherein the adhesive layer contains the elastomer in an amount of 10 to 50 parts by mass (based on 100 parts by mass of the sum of the curable resin component and the curing agent resin component).

7. The adhesive sheet according to Claim 5, wherein the thickness of the adhesive layer is 2 to 300 $\mu$m.

## INTERNATIONAL SEARCH REPORT

| | International application No. |
|---|---|
| | PCT/JP2018/029353 |

### A. CLASSIFICATION OF SUBJECT MATTER
Int. Cl. C09J7/20(2018.01)i, B32B27/00(2006.01)i, C09J201/00(2006.01)i

According to International Patent Classification (IPC) or to both national classification and IPC

### B. FIELDS SEARCHED

Minimum documentation searched (classification system followed by classification symbols)
Int. Cl. C09J7/20, B32B27/00, C09J201/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2009/048176 A1 (LINTEC CORP.) 16 April 2009, | 1, 5 |
| Y | claims, page 1, lines 5-7, page 4, lines 24-28, examples, fig. 4 & US 2010/0209671 A1, claims, paragraphs [0001], [0025], examples, fig. 4 & EP 2199356 A1 & CN 101827907 A & KR 10-2010-0060016 A & JP 2009-96816 A | 2-4, 6-7 |
| X | JP 2006-245211 A (OKI DATA CORP.) 14 September | 1, 5 |
| Y | 2006, claims, paragraphs [0004], [0011], [0015], [0063], fig. 3 (Family: none) | 2-4, 6-7 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30.08.2018 | 11.09.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

| International application No. |
| --- |
| PCT/JP2018/029353 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-513067 A (MINNESOTA MINING AND MANUFACTURING CO.) 08 May 2002, claims, paragraphs [0024]-[0033], [0040], [0049], fig. 2, 4 & WO 1999/055790 A1, claims, page 7, line 26 to page 10, line 28, page 13, lines 1-3, page 15, line 24 to page 16, line 6, fig. 2, 4 & EP 1084204 A1 | 1, 5<br>2-4, 6-7 |
| X | JP 5-226571 A (TOMOEGAWA PAPER CO., LTD.) 03 September 1993, claims, paragraphs [0003]-[0005], [0008]-[0015], examples (Family: none) | 1-7 |
| Y | WO 2016/163514 A1 (TERAOKA SEISAKUSHO CO., LTD) 13 October 2016, claims, paragraphs [0007], [0068]-[0113] & CN 106414640 A & KR 10-2017-0018094 A & TW 201641635 A | 2-4, 6-7 |
| A | JP 2000-234081 A (TOYO INK MANUFACTURING CO., LTD.) 29 August 2000, entire text (Family: none) | 1-7 |
| A | WO 2016/143731 A1 (NITTO DENKO CORP.) 15 September 2016, entire text & EP 3266837 A1, entire text & KR 10-2017-0125928 A & CN 107429087 A & JP 2017-14523 A | 1-7 |
| A | JP 10-144857 A (DAINIPPON PRINTING CO., LTD.) 29 May 1998, entire text (Family: none) | 1-7 |
| P, A | WO 2017/169574 A1 (TORAY INDUSTRIES, INC.) 05 October 2017, entire text & TW 201807145 A | 1-7 |
| A | WO 2008/050577 A1 (NITTO DENKO CORP.) 02 May 2008, entire text & US 2010/0032368 A1, entire text & EP 2085443 A1 & KR 10-2009-0074080 A & CN 101528877 A & JP 2008-100430 A | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016163514 A